# EUROPEAN PATENT APPLICATION

(11) **EP 4 657 697 A1**
(43) Date of publication of application: **03.12.2025**
(21) Application number: 24179041.9
(22) Date of filing: 30.05.2024
(51) Int. Cl.: H02J 3/36, H02J 3/38

(54) **OFFSHORE MODULES FOR CONVERTING POWER IN BI-POLE MODE, AN OFFSHORE PLATFORM SYSTEM AND A METHOD THEREOF**

(71) Applicant: Hitachi Energy Ltd, 8050 Zürich (CH)
(72) Inventor: Nielsen, Jonas, 444 46 Stenungsund (SE); Knutsson, Jonas, 781 97 Borlänge (SE); Mood, Johan, 771 92 Ludvika (SE); Nilsson, Sofie, 771 92 Ludvika (SE); Karlsson, Lars, 790 55 Falun (SE); Gustavsson-Monk, Janna, 771 43 Ludvika (SE); Messler, Fredrik, 791 55 Falun (SE)
(74) Representative: AWA Sweden AB

(57) **Abstract**

There is disclosed herein a first offshore module (10A) comprising an AC termination device (20A) providing AC power to a converter unit (30A) of the first offshore module, a DC pole termination device (32A) configured to provide a first DC output (33A) and a DC neutral termination device (34A) configured to provide a DC terminal at neutral potential (35). The first offshore module further comprises a connection arrangement (40A) configured to connect the first offshore module to another offshore module, a control system (52A) configured to operate the first offshore module in a monopole mode, or if the first offshore module is connected to said another offshore module, to operate at least one of the offshore modules in a bi-pole mode or in a monopole mode. There is also disclosed herein a second offshore module (10B), an offshore platform system (1) and a method (100).

## Description

### Technical field

The present disclosure relates to offshore modules configured to convert power between alternating current, AC, power and direct current, DC, power in a monopole mode and/or a bi-pole mode. The present disclosure further relates to an offshore platform system and a method for commissioning an offshore platform system.

### Background

The ongoing electrification of various sectors, such as transportation and heating, together with the demand for fossil-free energy sources, such as wind energy and solar energy, leads to a more complex power system with a higher demand for energy.

Offshore wind power plants are increasingly favored due to several advantages. Firstly, offshore winds are generally stronger and more consistent than onshore winds, leading to higher and more reliable energy production. The open ocean also experiences less turbulence, which enhances the efficiency and lifespan of turbines. Additionally, the vast space available offshore allows for the construction of larger wind farms without the constraints and conflicts associated with land use. These factors make offshore wind a more viable and efficient option for expanding renewable energy capacity.

Wind power plants generate alternating current (AC) power, which incurs high losses when transmitted over long distances. To mitigate these losses, power from offshore wind farms is typically converted from AC to direct current (DC) power at offshore platforms. This conversion allows the electricity to be transmitted more efficiently through DC cables to the shore, minimizing energy loss over the extended distance.

However, the installation of offshore platforms and their converters is primarily prepared on land to minimize offshore work. This approach leads to the construction of large, heavy structures that must be transported to the offshore site. Consequently, a significant challenge in the offshore wind industry is the limited availability of vessels capable of transporting and/or lifting these massive platforms to their locations. Further challenges are the complex structure and the limited flexibility when building the conventional offshore converter platforms. Therefore, improved offshore platform for converting power is required.

### Summary

It is therefore an object of the present disclosure to provide a first offshore module configured to convert power between alternating current, AC, power and direct current, DC, power that alleviates at least part of the above-mentioned drawbacks. It is for example an object of the present disclosure to provide an offshore module, which can be transported by a wider range of vessels and to provide an offshore module that can operate in both a monopole mode and a bi-pole mode. Further objects of the present disclosure are to provide a second offshore module, an offshore platform, and a method for installing the offshore platform.

According to a first aspect of the present disclosure, a first offshore module configured to convert power between alternating current, AC, power and direct current, DC, power is provided. The first offshore module comprises an AC termination device for receiving at least one AC cable providing AC power to the first offshore module and a converter unit connected to the AC termination device and configured to convert power between AC power and DC power. The first offshore module further comprises a DC pole termination device connected to the converter unit and configured to provide a (first) DC output and a DC neutral termination device connected to the converter unit and configured to provide a DC terminal at neutral potential, i.e. a DC neutral. The first offshore module further comprises a connection arrangement configured to connect the first offshore module to another offshore module comprising at least a converter unit configured to convert power between AC and DC power, and a control system configured to operate the first offshore module in a monopole mode, or if the first offshore module is connected to said another offshore module, to operate at least one of the offshore modules in a bi-pole mode or in a monopole mode. The first offshore module further comprises a housing in which at least the AC termination device, the converter unit, and the connection arrangement are arranged.

According to a second aspect of the present disclosure, a second offshore module configured to convert power between alternating current, AC, power and direct current, DC, power is provided. The second offshore module comprises an AC termination device for receiving at least one AC cable providing AC power to the second offshore module and a converter unit connected to the AC termination device and configured to convert power between AC power and DC power. The second offshore module further comprises a DC pole termination device connected to the converter unit and configured to provide a (second) DC output and a cross-connection termination connected to the converter unit and configured to be connected to a DC neutral termination device of the first offshore module. The second offshore module further comprises a connection arrangement configured to connect the second offshore module to another offshore module (such as, for example, the above described first offshore module) comprising at least a converter unit configured to convert power between AC and DC power, and a control system configured to operate the second offshore module in a monopole mode, or if the second offshore module is connected to said another offshore module, to operate at least one of the offshore modules in a bi-pole mode or in a monopole mode. The second offshore module further comprises a housing in which at least the AC termination device, the converter unit, and the connection arrangement are arranged.

According to a third aspect of the present disclosure, an offshore platform system configured to convert power between alternating current, AC, power and direct current, DC, power is provided. The offshore platform system comprises at least one support structure, and two offshore modules arranged on said at least one support structure. The two offshore modules may be two first offshore modules as defined according to the first aspect. In this case, the DC neutral in at least one of said two first offshore modules is used, when said two first offshore modules are operated in bi-pole mode, and at least one of the control systems of said two first offshore modules is configured to operate said two first offshore modules in bi-pole mode or in monopole mode.

Alternatively, one of the two offshore modules may be a first offshore module as defined in the above described first aspect and the other one of the two offshore modules may be a second offshore module as defined in the above described second aspect.

According to a fourth aspect of the present disclosure a method for commissioning an offshore platform system is provided. The method comprises installing and commissioning a primary offshore module according to the first aspect, installing and commissioning a secondary offshore module according to the first aspect or according to the second aspect, and operating the primary offshore module and the secondary offshore module in a respective monopole mode or in a bi-pole mode.

As the installation of offshore platforms and their converters is primarily prepared on land to minimize offshore work, the number of vessels able to transport and/or lift the conventional offshore platforms is limited. By providing the converters of the offshore platforms as modules, the weight of each module is reduced and thereby the number of available vessels increases. Further, the crane size needed to install and handle the offshore modules is reduced. Therefore, the use of modules according to the present disclosure for forming the offshore platform is beneficial. In this modularization approach, the first offshore module is prepared to be used in a monopole configuration or in a bi-pole configuration. The first offshore module is equipped with an AC termination device for receiving AC cables, a DC pole termination device to provide a first DC output and a DC neutral termination device to provide a DC neutral. Accordingly, already with only the first offshore module being installed, the offshore platform system can start operating, the first offshore module being able to operate in monopole mode. However, the first offshore module is also prepared to be used in a bi-pole configuration. If another module is provided and connected to the first offshore module, the first offshore module may be operated in a bi-pole mode. This is advantageous as the first offshore module may be installed and commissioned before another module is installed. As an example, the first offshore module may be installed and commissioned when a first stage of a wind power plant is commissioned. In this case, the first offshore module would operate in monopole mode. This allows the first stage of the wind power plant to start producing power that is converted and delivered to mainland by the first offshore module, while further stages of the wind power plant are built. When further stages of the wind power plant are ready to be commissioned, said another module may be installed to increase the capacity of the offshore platform system. The modularity of the first offshore module and the second offshore module allows for commissioning a wind power plant in stages, thereby scaling up the offshore platform system, as well as for constructing the offshore module one at a time. This results in that each offshore module has a lower weight compared to a conventional bi-pole configuration where both of the poles are transported and installed in the same structure, i.e., the same housing.

It should be understood that there is a difference in an offshore module being constructed as a bi-pole/monopole and an offshore module actually operating in a bi-pole mode and a monopole mode. As an example, the first offshore module is prepared to be used in a bi-pole configuration, but it is also prepared to operate in a monopole mode. Monopole configurations are simpler and cheaper, but they also have lower capacity and redundancy. In contrast, a bi-pole configuration, providing higher capacity and reliability. It can operate in monopole mode if one conductor fails, thereby providing redundancy.

When another module is installed and commissioned in the offshore platform system, the first offshore module is cross-connected to said another module such that these may co-operate as a respective monopole or as a bi-pole. Said another module may for example be a module as defined in the first aspect, i.e., two first offshore modules may be connected to each other.

In another example, said another module may be a module as defined in the second aspect, i.e., a first offshore module in accordance with the first aspect is connected to a second offshore module in accordance with the herein disclosed second aspect. The second offshore module is not equipped with a DC neutral termination device. Instead, the second offshore module is equipped with a cross-connection termination which is used to connect the second offshore module to the DC neutral termination of the first offshore module. This allows the second offshore module to be connected to the DC neutral, i.e., the DC neutral cable. It is expensive to install a DC neutral cable and therefore it may be advantageous to cross-connect the second offshore module to the already existing DC neutral cable connected in the DC neutral termination device of the first offshore module. With a first offshore module already installed, the second offshore module will be slightly less expensive to produce and may also have a slightly lower weight than the first offshore module.

The AC termination device is used for connecting AC cables. As an example, in a wind power plant, each wind power turbine may provide one AC cable to the AC termination device, such that a plurality of wind power turbines is connected with a respective AC cable to the AC termination device. The wind power turbines produce AC power that is fed to the first offshore module, or the second offshore module. The converter unit receives the AC power and converts the AC power to DC power. In this case the converter unit operates as a rectifier unit. However, it should be understood that the converter unit may also receive DC power and converter the DC power to AC power. In this case the converter unit operates as an inverter unit. The AC termination device of the first offshore module and the AC termination device of the second offshore module are completely separated from each other such that each offshore module is allowed to operate independently of the other offshore module, at the AC sides. This provides redundancy as one of the offshore modules may keep operating even if a fault occurs in for example the AC termination of the other offshore module. By separating the AC termination devices, the availability of the offshore platform system may be increased.

The converter unit of each offshore module is provided with a DC pole termination device which provides a DC output, i.e., such that each respective offshore module can provide (or function as) a DC pole. In the example with one first offshore module and one second offshore module, the first offshore module will provide one DC pole and the second offshore module provides a second DC pole.

Each of the first offshore module and the second offshore module is also provided with a connection arrangement which allows the two offshore modules to operate together, either as a respective monopole or as a bi-pole, depending on in which mode the two offshore modules are controlled by the respective control system. The connection arrangements are used to cross-connect different utility functions of the offshore modules. The cross-connections are installed offshore when both of the first offshore module and said another offshore module are installed. The cross-connections connect the two offshore modules electrically and/or physically depending on which utility function is cross-connected.

For example, a utility function that may be cross-connected between two offshore modules is the respective control system. Generally, each control system operates their own offshore module and only exchange information with the other offshore module. However, the control systems may communicate with each other and also operate the other offshore module. As an example, the first offshore module may control and operate both the first offshore module and the second offshore module. This provides further redundancy to the offshore modules and the offshore platform system. There may also be cross-connections between the two DC pole termination devices as well as the two AC termination devices. It is up to the designer, depending on requirements for a particular application, how many cross-connections are necessary and what types of redundancy are required.

The control system of the first offshore module is prepared to operate the first offshore module in monopole mode or in bi-pole mode. If only one offshore module is provided, the only mode available is the monopole mode, as only one DC pole is provided. However, if another offshore module is provided (and connected to the first offshore module), the control system of the first offshore module may operate the first offshore module either in monopole mode or bi-pole mode. Further, the control system of the first offshore module may also be used to operate said another offshore module in either monopole mode or bi-pole mode. In the same way, the control system of said another offshore system may be used to control the first offshore module in either monopole mode or bi-pole mode. In other words, only one of the control systems may be used to control the two offshore modules, both in a respective monopole mode, or in bi-pole mode. In one scenario, each control system is used to operate the mode of its own offshore module, such that for example, the control system of the first offshore module controls the first offshore module to operate in bi-pole mode and the control system of said another offshore module controls said another offshore module to operate in bi-pole mode. This is equally applicable if said another offshore module is an offshore module according to the first aspect (i.e., a first offshore module) or an offshore module according to the second aspect (i.e., a second offshore module).

As can be understood from the description, one of the main differences between the first offshore module and the second offshore module is that the first offshore module is equipped with a DC neutral termination device to which a DC neutral cable can be connected. This allows the first offshore module to operate before the second offshore module is installed and commissioned. Further, this allows for a slightly lighter and cheaper design of the second offshore module as all the equipment for the DC neutral cable is installed in the first offshore module and only cross-connections are used from the second offshore module to gain access to the DC neutral cable. The DC neutral cable may be a dedicated metallic return cable.

Each offshore module is provided with a respective housing which protects the equipment of the offshore module from the environment and also isolates the offshore module from the other offshore module. With all equipment is herein meant that the also the control system may be arranged in the housing, such that the housing encloses all parts of the offshore module. Each offshore module may be arranged in a respective housing such that the two modules are physically separated from each other.

The two offshore modules may be arranged in an offshore platform system. The offshore platform system provides a bi-pole configuration that also can be used as two monopoles in view of the modularity of the two offshore modules described above. The offshore modules are arranged on at least one support structure. The support structure may be any supporting structure that keeps the offshore module above the water. This could be a jacket structure, gravity-based structure, one or more floating platforms, a tripod structure or even a respective anchored vessel. Each of the offshore modules could be arranged on a respective support structure such that one of the two offshore modules is positioned on a first support structure and the second of the two offshore modules is positioned on a second support structure.

When the offshore platform system comprises two of the first offshore module, the DC neutral of the two first offshore modules may be cross-connected. This provides redundancy to the DC neutral of the two first offshore modules. When operating, the two first offshore modules may share one of the two DC neutrals or use their respective DC neutral.

Generally, the offshore platform may be an HVDC offshore platform, and the offshore modules may be referred to as HVDC offshore modules.

The first offshore module and the second offshore module may also be referred to as a topside of the support structure.

In the present disclosure, reference to operation in a bi-pole mode or a monopole mode may also be referred to as a bipolar mode or a monopolar mode, respectively. Operation in a bipolar mode implies that the offshore modules are arranged, or connected, to provide two respective poles of the offshore platform system. In the following, this may be referred to as a bi-pole (or bipolar) configuration. Operation in a monopolar mode means that one offshore module can operate on its own as a single pole. In the following, this may be referred to as a monopole (or monopolar) configuration.

According to the present inventive concept, a bi-pole configuration can be obtained via two separate offshore modules. The DC poles are separated into two offshore modules, a first offshore module and a second offshore module. With the first offshore module having the DC neutral termination device allowing a DC neutral cable to be connected, the first offshore module may be installed and commissioned long before the second offshore module. During this time, the first offshore module can operate in monopole mode, while still being prepared to operate in bi-pole mode. When, at a later stage, the second offshore module is installed and commissioned, the first and second offshore modules may operate in bi-pole mode or, alternatively, in monopole mode as two respective monopoles. This flexibility facilitates both the commissioning at offshore platforms as well as the construction and installation process of the offshore modules. Even if the total weight may be the same, the lower weight of each offshore module facilitates transport and/or lifting of the offshore platform, such that for example further vessels can be used as compared to a conventional offshore module with a bi-pole configuration (that is not modularized). This will shorten the lead times of building offshore platforms and thereby also of building wind power plants offshore.

The first offshore module may further comprise a protection system configured to detect and isolate faults in at least the first offshore module.

The protection system for the first offshore modules operates by continuously monitoring electrical parameters such as voltage, current, and impedance to detect anomalies indicating faults. When a fault is detected, the system quickly activates isolation mechanisms, typically involving circuit breakers or switches, to disconnect the faulty section. The protection system of the first offshore module may also be used for the second offshore module, when provided/installed and connected to the first offshore module.

The protection system and the control system may be arranged or provided in a utility system.

The utility system may further comprise an auxiliary unit. The auxiliary unit may be able to provide auxiliary power to the utility system. The auxiliary unit may be an emergency generator and generator switchgear to be used in case the first offshore module losses power. This allows the control system and the protection system to keep operating.

The utility system of the first offshore module may be cross-connected with the second offshore module such that the utility system of the first offshore module may provide utility functions also to the second offshore module.

The second offshore module may also be provided with a utility system.

The first offshore module may further comprise a transformer arranged in said housing and connected between the AC termination device and the converter unit.

The second offshore module may further comprise a transformer arranged in said housing and connected between the AC termination device and the converter unit.

The transformer is used to step up and down the voltage between the AC termination device and the converter unit. For example, the incoming AC power from a wind turbine may need to be stepped up to 400 kV before converted to DC power.

The first offshore module may further comprise at least one first switchgear arranged in said housing and connected between the AC termination device and the converter unit.

The second offshore module may further comprise at least one first switchgear arranged in said housing and connected between the AC termination device and the converter unit.

Switchgear refers to a collection of electrical devices used to control, protect, and isolate electrical equipment. The switchgear may be controlled by the utility system. There may be one first switchgear at each side of the transformer, such that both sides of the transformer may be disconnected and isolated.

The first offshore module may further comprise at least one reactor arranged in said housing and connected either at an AC side or a DC side of the converter unit of the first offshore module.

The reactors are used for voltage regulation and stability in the electrical system. They manage power flow and reactive power, which is relevant for maintaining voltage levels and ensuring the stability and efficiency of power transmission from the offshore wind farm to the onshore grid. Reactors also limit fault current in the event of a fault, protect equipment and reduce the risk of damage.

The reactors are, for example, converter reactors, smoothing reactors, filter reactors, or other suitable filters for HVDC operations.

The connection arrangement of the first offshore module may further comprise a second switchgear. A second switchgear may be provided to the connection arrangement for enabling the cross-connections to be isolated in case of a fault.

Effects and features of the third aspect and the fourth aspect may be largely analogous to those described above in connection with the combination of the first aspect and the second aspect. Embodiments mentioned in relation to the first aspect and second aspect may be at least largely compatible with the third aspect and the fourth aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular parts of the offshore modules, offshore platform system and method described herein. It is also to be understood that the terminology used herein is for the purpose of describing particular embodiments only, and it is not intended to be limiting.

### Brief description of the drawings

The above and other aspects of the present disclosure will now be described in more detail, with reference to the appended figures, wherein:
- Fig. 1: schematically shows an overview of an offshore platform system.
- Fig. 2: schematically shows one exemplifying embodiment of an offshore platform system comprising a first offshore module and a second offshore module.
- Fig. 3: schematically shows one exemplifying embodiment of an offshore platform system comprising a first offshore module and a second offshore module.
- Fig. 4: schematically shows a method for commissioning an offshore platform system.

### Detailed description

The present disclosure is described in the following by way of a number of illustrative examples. It will be appreciated that these examples are provided for illustration and explanation only and are not intended to be limiting on the scope of the disclosure.

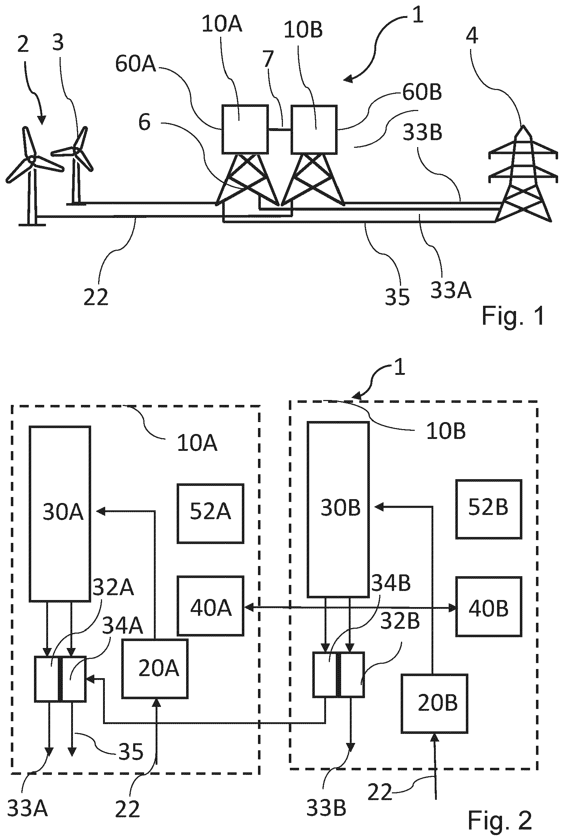

Fig. 1 illustrates an offshore platform system 1 arranged offshore in the ocean. The offshore platform system 1 comprises a first offshore module 10A and a second offshore module 10B and two support structures 6. The first offshore module 10A is arranged on one of the two support structures 6 and the second offshore module 10B is arranged on the second one of the two support structures 6. The offshore platform system 1 is positioned offshore and configured to convert power between alternating current, AC, power and direct current, DC, power. In Fig. 1 the offshore platform system 1 is connected to an offshore wind power plant 2 comprising a plurality of wind turbines 3, illustrated by two wind turbines 3. An AC cable 22 for each wind turbine 3 is connected to one of the first offshore module 10A and the second offshore module 10B. A DC cable 33A, 33B for each of the first offshore module 10A and the second offshore module 10B is connected to a power grid 4 onshore. The DC cables may arrive to a converter station (not shown) which converts the power back to AC power for the power grid. The first offshore module 10A is also provided with a DC neutral 35 which is also connected to the power grid at land, i.e., onshore. The offshore platform system 1 provides a bi-pole configuration where the first offshore module 10A and the second offshore module 10B provides one respective pole. The first offshore module 10A and the second offshore module 10B may also be operated in monopole mode. The first offshore module 10A comprises a housing 60A which surrounds (or encloses) the equipment of the first offshore module 10A. The second offshore module 10B comprises a housing 60B which surrounds (or encloses) the equipment of the second offshore module 10B. The housings 60A, 60B physically separate the first offshore module 10A and the second offshore module 10B. Generally, the offshore platform 1 and the offshore modules 10A, 10B may be referred to as an HVDC offshore platform and HVDC offshore modules.

The first offshore module 10A and the second offshore module 10B are connected to each other through cross-connections of utility functions, represented by line 7 in Fig. 1. These cross-connections will be further described in connection to Figs. 2-4.

The support structure 6 is in Fig. 1 illustrated as one support structure 6 for each of the offshore modules 10A, 10B. However, as an alternative, both of the offshore modules 10A, 10B may be arranged on the same support structure 6. The support structure 6 may for example be a jacket structure, a gravity-based structure, one or more floating platforms, a tripod structure or even a respective anchored vessel. The support structure 6 may in other words be mounted to the sea bottom through known means or be a floating structure.

The offshore platforms are an important facility offshore as there are large losses associated with transporting AC power for long distances. Therefore, the offshore platforms system 1 is provided to convert the AC power to DC power to thereby reduce the losses associated with transporting AC power over long distances. In Fig. 1 the distance between the offshore platform system 1 and the wind power plant 2, and the distance between the offshore platform system 1 and the power grid 4 appears to be equal. However, the offshore platform system 1 is typically positioned closer to the wind power plant 2.

In Fig. 2 an example of the offshore platform system 1 and its two modules is provided. The offshore platform system 1 comprises a first offshore module 10A and a second offshore module 10B.

The first offshore module 10A comprises an AC termination device 20A for receiving at least one AC cable 22 providing AC power to the first offshore module 10A and a converter unit 30A connected to the AC termination device 20A and configured to convert power between AC power and DC power. The first offshore module 10A further comprises a DC pole termination device 32A connected to the converter unit 30A and configured to provide a first DC output 33A, for a DC cable from land to be connected to, and a DC neutral termination device 34A connected to the converter unit 30A and configured to provide a DC neutral 35. The first offshore module 10A further comprises a connection arrangement 40A configured to connect the first offshore module 10A to another offshore module. In Fig. 2 said another offshore module is the second offshore module 10B.

The second offshore module 10B comprises an AC termination device 20B for receiving at least one AC cable 22 providing AC power to the second offshore module 10B and a converter unit 30B connected to the AC termination device 20B and configured to convert power between AC power and DC power. The second offshore module 10B comprises a DC pole termination device 32B connected to the converter unit 30B and configured to provide a second DC output 33B and a cross-connection termination 34B connected to a DC neutral termination device 34A of the first offshore module 10A and the converter unit 30B. The second offshore module 10B further comprises a connection arrangement 40B configured to connect the second offshore module 10B to the first offshore module 10A.

As is understood from the drawing, each of the first offshore module 10A and the second offshore module 10B comprises a housing 60A, 60B enclosing the equipment of their respective offshore modules.

Each of the first offshore module 10A and the second offshore module 10B is also provided with a connection arrangement 40A, 40B which allows the two offshore modules 10A, 10B to operate together. The connection arrangements 40A, 40B are used to cross-connect different utility functions of the offshore modules 10A, 10B. For example, the connection arrangements 40A, 40B may be used to cross-connect the control systems 52A, 52B, or to cross-connect functions such as a respective cooling system (not shown) of the first offshore module 10A and the second offshore module 10B. There may be cross-connections between the two DC pole termination devices 32A, 32B as well as the two AC termination devices 20A, 20B.

Generally, each control system operates its own offshore module and only exchange information with the other offshore module. However, the control systems 52A, 52B may communicate with each other and also operate the other offshore module.

In a bi-pole configuration, the first offshore module 10A provides a first DC pole and the second offshore module 10B provides a second DC pole. The first offshore module 10A and the second offshore module 10B are each provided with a control system 52A, 52B which is used to either operate the first offshore module 10A and the second offshore module 10B in bi-pole mode, or to operate each of the first offshore module 10A and the second offshore module 10B in a respective monopole mode. For example, the control system 52A of the first offshore module 10A may control and operate the first offshore module 10A, while the control system 52B of the second offshore module 10B may control and operate the second offshore module 10B. However, in another example, one of the control systems 52A, 52B may operate both the first offshore module 10A and the second offshore module 10B in either bi-pole mode or monopole mode. As an example, the control system 52A of the first offshore module 10A can be used to send a control signal to the control system 52B of the second offshore module 10B, and the control system 52B acts on said control signal to control the monopole mode of the second offshore module 10B or to control the bi-pole mode of the second offshore module 10B. As a further example, the control system 52A of the first offshore module 10A can be used to operate the first offshore module 10A in either monopole mode or bi-pole mode, while the control system 52B of the second offshore module 10B can be used to operate the second offshore module 10B in either monopole mode or bi-pole mode.

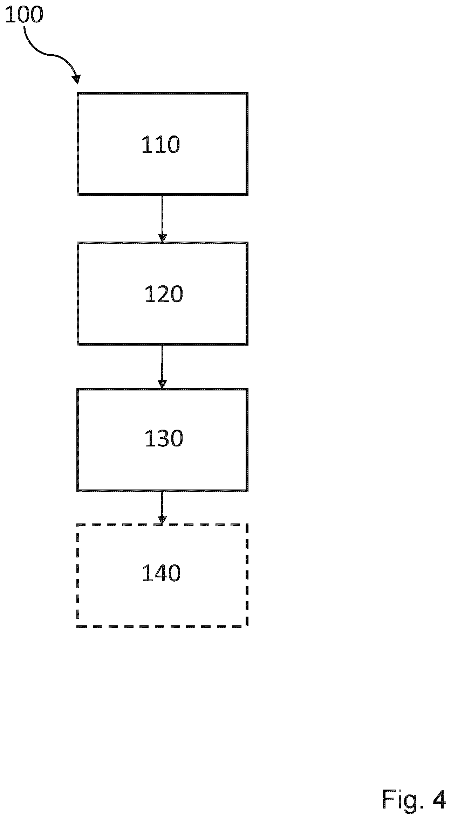

As can be understood from Fig. 2, one of the main differences between the first offshore module 10A and the second offshore module 10B is that the first offshore module 10A is equipped with a DC neutral termination device 34A to which a DC neutral cable 35 is connected. This allows the first offshore module 10A to operate before the second offshore module 10B is installed and commissioned, which will be further discussed in connection to Fig. 4. Instead of providing the second offshore module 10B with its own DC neutral cable, the cross-connection termination device 34B of the second offshore module 10B is cross-connected to the DC neutral termination device 34A of the first offshore module 10A, such that the second offshore module 10B can use the DC neutral cable 35 of the first offshore module 10A while operating.

Further, instead of connecting two offshore modules of different kinds, i.e. a first offshore 10A module according to the first aspect described herein with another (or second) offshore module 10B according to the second aspect described herein, two offshore module of the same kinds, in particular two first offshore modules could be used to operate for obtaining a bi-pole configuration of the offshore platform system 1. In this case, there would be two DC neutral termination devices 34A with a respective DC neutral cable 35, one for each of the first offshore modules 10A. The two DC neutral termination devices 34A may be cross-connected such that redundancy is achieved for the DC neutral cable 35.

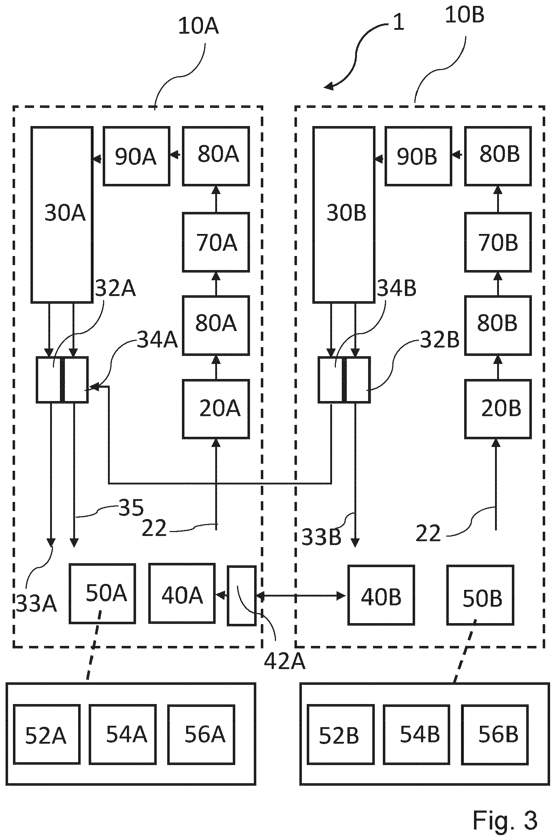

In Fig. 3, a second exemplifying embodiment of the offshore platform system 1 is illustrated. The offshore platform system 1 comprises a first offshore module 10A and a second offshore module 10B. As earlier described in connection to Fig. 2, the first offshore module 10A comprises a converter unit 30A and an AC termination device 20A for receiving at least one AC cable 22. The first offshore module 10A further comprises a DC pole termination device 32A connected to the converter unit 30A and configured to provide a first DC output 33A, for a DC cable from land to be connected to, and a DC neutral termination device 34A connected to the converter unit 30A and configured to provide a DC neutral 35. The first offshore module 10A further comprises a connection arrangement 40A configured to connect the first offshore module 10A to another offshore module. In Fig. 3, said another offshore module is the second offshore module 10B. The second offshore module 10B comprises an AC termination device 20B, and a converter unit 30B connected to the AC termination device 20B. The second offshore module 10B comprises a DC pole termination device 32B connected to the converter unit 30B and configured to provide a second DC output 33B and a cross-connection termination 34B connected to a DC neutral termination device 34A of the first offshore module 10A and the converter unit 30B. The second offshore module 10B further comprises a connection arrangement 40B configured to connect the second offshore module 10B to the first offshore module 10A.

In Fig. 3, the first offshore module 10A and the second offshore module 10B comprises a respective transformer 70A, 70B. The transformers 70A, 70B are used to step up or down the voltage between the AC termination device 20A, 20B and the converter unit 30A, 30B. For example, the incoming AC power from a wind turbine 3 may need to be stepped up to 400 kV before being converted to DC power.

At either side of the transformers 70A, 70B there is a respective first switchgear 80A, 80B arranged such that the transformers 70A, 70B can be disconnected and isolated. In other words, there is a first switchgear 80A, 80B between the AC termination device 20A, 20B and the transformer 70A, 70B in each offshore module 10A, 10B, and there is a first switchgear 80A, 80B arranged between the transformer 70A, 70B and a reactor 90A, 90B of each of the offshore modules 10A, 10B. The reactors 90A, 90B are also connected to the converter unit 30A, 30B in each of the offshore modules 10A, 10B. In this case the reactors 90A, 90B are arranged on the AC side of the converter unit 30A, 30B. However, reactors may, in addition or as an alternative, be positioned at the DC side of the converter unit 30A, 30B. If that is the case, the first switchgear is arranged between the transformer 70A, 70B and the converter unit 30A, 30B instead.

Switchgear refers to a collection of electrical devices used to control, protect, and isolate electrical equipment. The switch gear may be controlled by the utility system. There may be one first switchgear at each side of the transformer, such that both sides of the transformer may be disconnected and isolated.

The reactors 90A, 90B are used for voltage regulation and stability in the electrical system. They manage reactive power for maintaining voltage levels and ensuring the stability and efficiency of power transmission from the offshore wind farm to the onshore grid. Reactors also limit fault current in the event of a fault, protect equipment and reduce the risk of damage.

Fig. 3 also shows an enlarged view of a utility system 50A of the first offshore module 10A. The utility system 50A comprises the control system 52A, a protection system 54A and an auxiliary unit 56A.

The protection system 54A for the first offshore modules 10A, operates by continuously monitoring electrical parameters such as voltage, current, and impedance to detect anomalies indicating faults. When a fault is detected, the system quickly activates isolation mechanisms, typically involving circuit breakers or switches of the switchgears, to disconnect the faulty section. The auxiliary unit 56A may be an emergency generator to be used in case the first offshore module 10A losses power. This allows the control system 52A and the protection system 54A to keep operating even when the power is lost.

The utility system 50A of the first offshore module 10A may be cross-connected with the second offshore module 10B such that the utility system 50A of the first offshore module 10A may provide utility functions also to the second offshore module 10B. This may be achieved through the connection arrangements 40A, 40B of the first offshore module 10A and the second offshore module 10B.

The second offshore module 10B also comprises a utility system 50B which comprises the control system 52B, a protection system 54B and an auxiliary device 56B as described in connection to the utility system 50A of the first offshore module 10A.

The connection arrangement 40A of the first offshore module 10A further comprises a second switchgear 42A. The second switchgear 42A may be provided to the connection arrangement 40A for enabling the cross-connections to be isolated in case of a fault, such that the fault does not transplant from the first offshore module 10A to the second offshore module 10B.

Fig. 4 illustrates a method 100 for commissioning an offshore platform system 1. The method 100 comprises installing and commissioning 110 a primary offshore module. The primary offshore module may for example be a first offshore module 10A.

The method 100 further comprises installing and commissioning 120 a secondary offshore module. The secondary offshore module may for example be a second offshore module 10B. However, the secondary offshore module may also be another first offshore module, such as the first offshore module 10A.

The method 100 further comprises operating 130 the primary offshore module and the secondary offshore module in a respective monopole mode or in a bi-pole mode.

One concept of the present disclosure is that a bi-pole configuration can be separated into two offshore modules. The DC poles are separated into two offshore modules, generally the first offshore module 10A and the second offshore module 10B. With the first offshore module 10A having the DC neutral termination device 34A allowing a DC neutral cable 35 to be connected, the first offshore module 10A may be installed and commissioned long before the second offshore module 10B. During this time, the first offshore module 10A can operate in monopole mode, while still being prepared to operate in bi-pole mode. In other words, the method 100 may further comprise operating 140 the primary offshore module in monopole mode.

When, at a later stage, the second offshore module 10B is installed and commissioned, the first offshore module 10A and the second offshore module 10B may operate in bi-pole mode or, alternatively, in respective monopole modes.

The modularity of the first offshore module 10A and the second offshore module 10B allows for commissioning a wind power plant in stages as well as for constructing the offshore module one at a time. This results in that each offshore module has a lower weight compared to a conventional bi-pole configuration where both of the poles are transported and installed in the same housing.

In other words, the first offshore module 10A and the second offshore module 10B are constructed onshore and transported to the offshore location on separate vessels.

As a summary, the offshore platform system 1 may install one offshore module at a time. If the first offshore module 10A prepared to operate in a bi-pole configuration is installed alone, the first offshore module 10A is still able to operate in monopole mode. The first offshore module 10A may operate in monopole mode for months or years until further conversion and transmission capabilities are required. At this stage, another offshore module can be installed. As the first offshore module 10A is already provided with all the necessary equipment, some of the equipment in the first offshore module 10A may be reused for said another offshore module (when installed). Said another offshore module may therefore be a second offshore module 10B that can use some of the equipment in the first offshore module 10A, through cross-connections, between the connection arrangements 40A, 40B, which already were prepared in the first offshore module 10. When the second offshore module 10B is commissioned, the first offshore module 10A and the second offshore module 10B may either operate as a respective monopole in monopole mode, or in bi-pole configuration in bi-pole mode.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

**1.** A first offshore module (10A) configured to convert power between alternating current, AC, power and direct current, DC, power, the first offshore module comprising:
an AC termination device (20A) for receiving at least one AC cable (22) providing AC power to the first offshore module,
a converter unit (30A) connected to the AC termination device and configured to convert power between AC power and DC power,
a DC pole termination device (32A) connected to the converter unit and configured to provide a DC output (33A),
a DC neutral termination device (34A) connected to the converter unit and configured to provide a DC terminal at neutral potential (35),
a connection arrangement (40A) configured to connect the first offshore module to another offshore module comprising at least a converter unit configured to convert power between AC and DC power;
a control system (52A) configured to operate the first offshore module in a monopole mode, or if the first offshore module is connected to said another offshore module, to operate at least one of the offshore modules in a bi-pole mode or in a monopole mode; and
a housing (60A) in which at least the AC termination device, the converter unit, and the connection arrangement are arranged.

**2.** The first offshore module according to claim 1, further comprising a protection system (54A) configured to detect and isolate faults in at least the first offshore module.

**3.** The first offshore module according to claim 2, wherein the control system and the protection system are arranged in a utility system (50A), wherein the utility system further comprises an auxiliary unit (56A).

**4.** The first offshore module according to any one of the preceding claims, further comprising a transformer (70A) arranged in said housing and connected between the AC termination device and the converter unit.

**5.** The first offshore module according to any one of the preceding claims, further comprising at least one first switchgear (80A) arranged in said housing and connected between the AC termination device and the converter unit.

**6.** The first offshore module according to any one of the preceding claims, further comprising at least one reactor (90A) arranged in said housing and connected either at an AC side or a DC side of the converter unit of the first offshore module.

**7.** The first offshore module according to any one of the preceding claims, wherein the connection arrangement comprises a second switchgear (42A).

**8.** A second offshore module (10B) configured to convert power between alternating current, AC, power and direct current, DC, power, the second offshore module comprising:
an AC termination device (20B) for receiving at least one AC cable (22) providing AC power to the second offshore module,
a converter unit (30B) connected to the AC termination device and configured to convert power between AC power and DC power,
a DC pole termination device (32B) connected to the converter unit and configured to provide a DC output (33B),
a cross-connection termination device (34B) connected to the converter unit and configured to be connected to a DC neutral termination device (34A) of another offshore module (10A),
a connection arrangement (40B) configured to connect the second offshore module to said another offshore module comprising at least a converter unit configured to convert power between AC and DC power;
a control system (52B) configured to operate the second offshore module in a monopole mode, or if the second offshore module is connected to said another offshore module, to operate at least one of the offshore modules in a bi-pole mode or in a monopole mode, and
a housing (60B) in which at least the AC termination device, the converter unit, and the connection arrangement are arranged.

**10.** The second offshore module according to claim 9, further comprising a transformer (70B) arranged in said housing and connected between the AC termination device and the converter unit.

**11.** The second offshore module according to claim 9 or 10, further comprising, at least one first switchgear (80B) arranged in said housing and connected between the AC termination device and the converter unit.

**12.** The second offshore module according to any one of claims 8 to 11, further comprising at least one reactor (90B) arranged in said housing and connected either at an AC side or a DC side of the converter unit.

**13.** An offshore platform (1) system configured to convert power between alternating current, AC, power and direct current, DC, power, the offshore platform system comprising:
at least one support structure (6), and
two offshore modules arranged on said at least one support structure,
wherein the two offshore modules are two first offshore modules (10A) as defined in any one of claims 1-7, wherein the DC terminal at neutral potential (35) in at least one of said two first offshore modules is used, when said two first offshore modules are operated in bi-pole mode, and wherein at least one of the control systems (50A) of said two first offshore modules is configured to operate said two first offshore modules in bi-pole mode or in monopole mode; or
wherein one of the two offshore modules is a first offshore module (10A) as defined in any one of claims 1-7 and the other one of the two offshore modules is a second offshore module (10B) as defined in any one of claims 8-12.

**14.** A method (100) for commissioning an offshore platform system, the method comprising:
installing and commissioning (110) a primary offshore module according to any one of claims 1 to 7,
installing and commissioning (120) a secondary offshore module according to any one of claims 1-7 or according to any one of claims 8 to 12, and
operating (130) the primary offshore module and the secondary offshore module in a respective monopole mode or in a bi-pole mode.

**15.** The method according to claim 14, further comprising operating (140) the primary offshore module in monopole mode.

**16.** The method according to claim 14 or 15, wherein the primary offshore module and the secondary offshore module are constructed onshore and transported to the offshore location on separate vessels.
